# EUROPEAN PATENT SPECIFICATION

(11) **EP 3 594 282 B1**
(45) Date of publication and mention of the grant of the patent: **17.07.2024**
(21) Application number: 18763360.7
(22) Date of filing: 09.03.2018
(51) Int. Cl.: C08K 5/09, C08K 5/098, C08K 5/20, C08K 5/29, C08K 5/3477

(54) **RUBBER COMPOSITION AND TIRE**
KAUTSCHUKZUSAMMENSETZUNG UND REIFEN
COMPOSITION DE CAOUTCHOUC ET PNEU

(30) Priority: 10.03.2017 JP 2017046732; 05.10.2017 JP 2017195206
(43) Date of publication of application: 15.01.2020
(73) Proprietor: Otsuka Chemical Co., Ltd., Osaka-shi, Osaka 540-0021 (JP)
(72) Inventor: SATO, Takashi, Tokushima-shi Tokushima 771-0193 (JP); YUASA, Hiroaki, Tokushima-shi Tokushima 771-0193 (JP); NAKASHIMA, Shinya, Tokushima-shi Tokushima 771-0193 (JP)
(74) Representative: Vossius & Partner Patentanwälte Rechtsanwälte mbB
(86) International application number: PCT/JP2018/009122
(87) International publication number: WO 2018/164249

(56) References cited:
- EP-A1- 2 799 468
- EP-A1- 3 357 961
- EP-A1- 3 357 961
- WO-A1-2017/057758
- WO-A1-2017/057758
- WO-A1-2017/057758
- JP-A- 2009 286 989
- JP-A- 2015 093 928

## Description

### Technical Field

The present invention relates to a rubber composition and a tire.

### Background Art

Recent environmental concerns have led to strict international regulations on carbon dioxide emissions and a highly increased demand for lower fuel consumption in automobiles. While the efficiency of drive systems such as engines, as well as transmission systems, greatly contributes to lower fuel consumption, rolling resistance of tires is also largely involved in lower fuel consumption. For lower fuel consumption in automobiles, reducing rolling resistance is important.

As a method for reducing the rolling resistance of tires, applying a rubber composition with low heat build-up to tires is known. Examples of such rubber compositions with low heat build-up include (1) a rubber composition comprising a functionalized polymer having increased affinity to carbon black and silica as fillers (Patent Literature (PTL) 1); (2) a rubber composition comprising a diene elastomer, an inorganic filler as a reinforcing filler, polysulphurized alkoxysilane as a coupling agent, 1,2-dihydropyridine, and a guanidine derivative (Patent Literature (PTL) 2); (3) a rubber composition comprising a rubber component, an aminopyridine derivative, and an inorganic filler (Patent Literature (PTL) 3); (4) a rubber composition comprising a terminal-modified polymer and an inorganic filler (Patent Literature (PTL) 4 and Patent Literature PTL 5); and the like.

According to the inventions disclosed in PTL 1 to PTL 5, heat build-up of a rubber composition can be reduced by increasing affinity between fillers and a rubber component. As a result, a tire with low hysteresis loss (rolling resistance) can be obtained.

However, the rubber compositions disclosed in PTL 1 to PTL 5 are insufficient in terms of further reducing heat build-up. Further, a reduction in the rolling resistance of a rubber composition usually decreases the steering stability. Even if both low heat build-up and steering stability are achieved, processability of unvulcanized rubber (in particular, unvulcanized rubber extrusion performance) is considerably deteriorated, inevitably decreasing productivity.

Patent Literature (PTL) 6 discloses an additive for imparting low heat build-up to a rubber component, wherein the additive includes a diene rubber, a tetrazine compound and stearic acid. However, PTL 6 does not disclose the fatty acid metal salts, fatty acid amides or fatty acid hydrazides as a processing aid.

With increasing demand for lower fuel consumption of automobiles, the development of tires that have further reduced heat build-up has been desired.

### Citation List

### Patent Literature

PTL 1: JP2003-514079A
PTL 2: JP2003-523472A
PTL 3: JP2013-108004A
PTL 4: JP2000-169631A
PTL 5: JP2005-220323A
PTL 6: WO 2017/057758 A1

### Summary of Invention

### Technical Problem

An object of the present invention is to provide a rubber composition that is capable of achieving more excellent steering stability and further reduced rolling resistance.

Another object of the present invention is to provide a tire having reduced rolling resistance.

### Solution to Problem

As a result of extensive research to achieve the above objects, the present inventors found that the above objects can be achieved by a rubber composition comprising a specific rubber component containing a diene rubber, a tetrazine compound, and a processing aid. The inventors further conducted research based on the above findings. The present invention has thus been completed.

The present invention provides the following rubber composition, tire, and the like.
Item 1.
   A rubber composition comprising:
   a rubber component;
   a tetrazine compound represented by Formula (1) or a salt thereof: 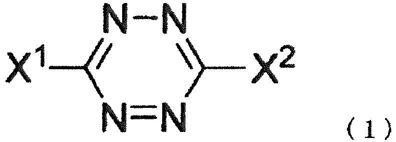
      wherein X¹ and X² each represent an optionally substituted heterocyclic group; and
         a processing aid,
      wherein
      the rubber component contains a diene rubber obtained by polymerization of monomers including 1,3-butadiene monomer, the diene rubber being present in an amount of 40 parts by mass or more, per 100 parts by mass of the rubber component, and wherein the tetrazine compound or a salt thereof is present in an amount of 0.1 to 10 parts by mass, per 100 parts by mass of the rubber component , and wherein the processing aid is at least one member selected from the group consisting of fatty acid metal salts having 8 or more carbon atoms, fatty acid amides having 8 or more carbon atoms
Item 2. and fatty acid hydrazides having 8 or more carbon atoms.
   The rubber composition according to Item 1, further comprising an inorganic filler and/or carbon black.
Item 3.
   The rubber composition according to Item 2, wherein the inorganic filler and/or carbon black are present in a total amount of 30 to 150 parts by mass, per 100 parts by mass of the rubber component.
Item 4.
   The rubber composition according to **Item 2 or 3,** wherein the inorganic filler is silica.
Item 5.
   The rubber composition according to any one of Items 1 to 4, wherein the processing aid is at least one member selected from the group consisting of fatty acid metal salts having 10 or more carbon atoms, fatty acid amides having 10 or more carbon atoms, and fatty acid hydrazides having 10 or more carbon atoms.
Item 6. The rubber composition according to any one of Items 1 to 4, wherein the processing aid is at least one member selected from the group consisting of saturated fatty acid metal salts having 10 or more carbon atoms, saturated fatty acid amides having 10 or more carbon atoms, and saturated fatty acid hydrazides having 10 or more carbon atoms.
**Item 7.** The rubber composition according to any one of Items 1 **to 4,** wherein the processing aid is at least one member selected from the group consisting of lauric acid metal salt, stearic acid metal salt, lauric acid amide, lauroyl sarcosine, stearic acid amide, lauric acid hydrazide, and stearic acid hydrazide.
**Item 8.** The rubber composition according to any one of Items 1 **to 4,** wherein the processing aid is at least one member selected from the group consisting of sodium laurate and sodium stearate.
**Item 9.** The rubber composition according to any one of Items 1 **to 8,** which is used for a tread portion.
**Item 10.** A tire tread produced using the rubber composition according to any one of Items 1 to **8.**
**Item 11.** A pneumatic tire comprising the tire tread of Item 10.

### Advantageous Effects of Invention

The present invention can provide a rubber composition that is capable of achieving more excellent steering stability and further reduced rolling resistance by combining a specific rubber component, a tetrazine compound represented by Formula (1) or a salt thereof, and a processing aid.

Further, the use of the rubber composition of the present invention in the production of a tire can achieve reduced rolling resistance of the tire and lowered heat build-up of the tire, thus providing a fuel-efficient tire.

### Description of Embodiments

The present invention is described in detail below.

### 1. Rubber Composition

The present invention provides a rubber composition comprising a rubber component, a tetrazine compound represented by the following Formula (1) or a salt thereof: 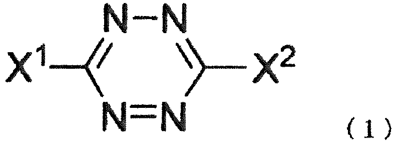
wherein X¹ and X² each represent an optionally substituted heterocyclic group (which hereinafter may be referred to as "the tetrazine compound (1)"), and a processing aid,
wherein the rubber component contains a diene rubber obtained by polymerization of monomers including 1,3-butadiene monomer, the diene rubber being present in an amount of 40 parts by mass or more, per 100 parts by mass of the rubber component, and wherein the tetrazine compound or a salt thereof is present in an amount of 0.1 to 10 parts by mass, per 100 parts by mass of the rubber component.

### Rubber Component

The rubber component incorporated in the rubber composition of the present invention is not particularly limited. Examples include diene rubbers, such as natural rubbers (NR), synthetic diene rubbers, and a mixture of natural rubber and synthetic diene rubber; and non-diene rubbers other than these rubbers.

Examples of natural rubbers include natural rubber latex, technically specified rubber (TSR), ribbed smoked sheet (RSS), gutta-percha, Chinese gutta-percha (*Eucommia ulmoides*)-derived natural rubber, guayule-derived natural rubber, Russian dandelion (*Taraxacum kok-saghyz*)-derived natural rubber, plant component-fermented rubber, and the like. Examples of natural rubbers further include modified natural rubbers, such as epoxidated natural rubber, methacrylic acid modified natural rubber, and styrene modified natural rubber.

Examples of synthetic diene rubbers include styrenebutadiene copolymer rubber (SBR), butadiene rubber (BR), isoprene rubber (IR), nitrile rubber (NBR), chloroprene rubber (CR), ethylene-propylene-diene terpolymer rubber (EPDM), styreneisoprene-styrene triblock copolymer (SIS), styrene-butadienestyrene triblock copolymer (SBS), and the like; and modified synthetic diene rubbers thereof. Examples of modified synthetic diene rubbers include main-chain-modified, one-terminal-modified, both-terminals-modified, or like modified diene rubbers. Examples of functional groups of modified synthetic diene rubbers include groups comprising one or more heteroatom-containing functional groups, such as epoxy, amino, alkoxy, hydroxyl, alkoxysilyl, polyether, and carboxyl groups. The cis/trans/vinyl ratio of the diene moiety is not particularly limited, and any ratio is suitable. The number average molecular weight and molecular weight distribution of the diene rubber are not particularly limited. The diene rubber preferably has a number average molecular weight of 500 to 3000000, and a molecular weight distribution of 1.5 to 15. The method for producing a synthetic diene rubber is also not particularly limited. Examples of the production method include emulsion polymerization, solution polymerization, radical polymerization, anionic polymerization, cationic polymerization, and the like.

A wide variety of non-diene rubbers can be used as the non-diene rubber.

The rubber component used in the rubber composition of the present invention contains a diene rubber as an essential requirement, in particular, a diene rubber obtained by polymerization of monomers including 1,3-butadiene monomer, from the viewpoint of rolling resistance. Specifically, the diene rubber obtained by polymerization of monomers including 1,3-butadiene monomer is present in an amount of 40 parts by mass or more, per 100 parts by mass of the rubber component. The diene rubber is preferably present in an amount of 70 parts by mass or more, and more preferably 80 to 100 parts by mass, per 100 parts by mass of the rubber component. Examples of the diene rubber obtained by polymerization of monomers including 1,3-butadiene monomer include SBR, BR, NBR, and the like, with SBR and BR being preferable.

Diene rubbers having a glass transition point of -120 to -15°C are effective in terms of achieving both steering stability and rolling resistance. In the rubber composition of the present invention, 50 mass% or more of the diene rubber preferably has a glass transition point of -70 to -20°C.

The rubber component can be used singly, or as a mixture (blend) of two or more. Among these, the rubber component is preferably natural rubber, IR, SBR, BR, or a mixture of two or more of these rubbers. More preferably, the rubber component is natural rubber, SBR, BR, or a mixture of two or more of these rubbers. Although the blending ratio of these rubbers is not particularly limited, SBR, BR, or a mixture thereof is preferably present in an amount of 70 to 100 parts by mass, and still more preferably 75 to 100 parts by mass, per 100 parts by mass of the rubber component. When a mixture of SBR and BR is incorporated, the total amount of SBR and BR is preferably within the range mentioned above. In this case, the amount of SBR is preferably in the range of 50 to 100 parts by mass, and the amount of BR is preferably in the range of 0 to 50 parts by mass.

### Tetrazine Compound (1)

The rubber composition of the present invention comprises a compound represented by Formula (1) or a salt thereof.

### Formula 1:

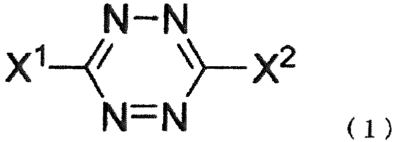

In the formula, X¹ and X² each represent an optionally substituted heterocyclic group.

The "heterocyclic group" as used herein is not particularly limited. Examples include 2-pyridyl, 3-pyridyl, 4-pyridyl, 2-pyrazinyl, 2-pyrimidyl, 4-pyrimidyl, 5-pyrimidyl, 3-pyridazyl, 4-pyridazyl, 4-(1,2,3-triazyl), 5-(1,2,3-triazyl), 2-(1,3,5-triazyl), 3-(1,2,4-triazyl), 5-(1,2,4-triazyl), 6-(1,2,4-triazyl), 2-quinolyl, 3-quinolyl, 4-quinolyl, 5-quinolyl, 6-quinolyl, 7-quinolyl, 8-quinolyl, 1-isoquinolyl, 3-isoquinolyl, 4-isoquinolyl, 5-isoquinolyl, 6-isoquinolyl, 7-isoquinolyl, 8-isoquinolyl, 2-quinoxalyl, 3-quinoxalyl, 5-quinoxalyl, 6-quinoxalyl, 7-quinoxalyl, 8-quinoxalyl, 3-cinnolyl, 4-cinnolyl, 5-cinnolyl, 6-cinnolyl, 7-cinnolyl, 8-cinnolyl, 2-quinazolyl, 4-quinazolyl, 5-quinazolyl, 6-quinazolyl, 7-quinazolyl, 8-quinazolyl, 1-phthalazyl, 4-phthalazyl, 5-phthalazyl, 6-phthalazyl, 7-phthalazyl, 8-phthalazyl, 1-tetrahydroquinolyl, 2-tetrahydroquinolyl, 3-tetrahydroquinolyl, 4-tetrahydroquinolyl, 5-tetrahydroquinolyl, 6-tetrahydroquinolyl, 7-tetrahydroquinolyl, 8-tetrahydroquinolyl, 1-pyrrolyl, 2-pyrrolyl, 3-pyrrolyl, 2-furyl, 3-furyl, 2-thienyl, 3-thienyl, 1-imidazolyl, 2-imidazolyl, 4-imidazolyl, 5-imidazolyl, 1-pyrazolyl, 3-pyrazolyl, 4-pyrazolyl, 5-pyrazolyl, 2-oxazolyl, 4-oxazolyl, 5-oxazolyl, 2-thiazolyl, 4-thiazolyl, 5-thiazolyl, 3-isoxazolyl, 4-isoxazolyl, 5-isoxazolyl, 3-isothiazolyl, 4-isothiazolyl, 5-isothiazolyl, 4-(1,2,3-thiadiazolyl), 5-(1,2,3-thiadiazolyl), 3-(1,2,5-thiadiazolyl), 2-(1,3,4-thiadiazolyl), 4-(1,2,3-oxadiazolyl), 5-(1,2,3-oxadiazolyl), 3-(1,2,4-oxadiazolyl), 5-(1,2,4-oxadiazolyl), 3-(1,2,5-oxadiazolyl), 2-(1,3,4-oxadiazolyl), 1-(1,2,3-triazolyl), 4-(1,2,3-triazolyl), 5-(1,2,3-triazolyl), 1-(1,2,4-triazolyl), 3-(1,2,4-triazolyl), 5-(1,2,4-triazolyl), 1-tetrazolyl, 5-tetrazolyl, 1-indolyl, 2-indolyl, 3-indolyl, 4-indolyl, 5-indolyl, 6-indolyl, 7-indolyl, 1-isoindolyl, 2-isoindolyl, 3-isoindolyl, 4-isoindolyl, 5-isoindolyl, 6-isoindolyl, 7-isoindolyl, 1-benzimidazolyl, 2-benzimidazolyl, 4-benzimidazolyl, 5-benzimidazolyl, 6-benzimidazolyl, 7-benzimidazolyl, 2-benzofuranyl, 3-benzofuranyl, 4-benzofuranyl, 5-benzofuranyl, 6-benzofuranyl, 7-benzofuranyl, 1-isobenzofuranyl, 3-isobenzofuranyl, 4-isobenzofuranyl, 5-isobenzofuranyl, 6-isobenzofuranyl, 7-isobenzofuranyl, 2-benzothienyl, 3-benzothienyl, 4-benzothienyl, 5-benzothienyl, 6-benzothienyl, 7-benzothienyl, 2-benzoxazolyl, 4-benzoxazolyl, 5-benzoxazolyl, 6-benzoxazolyl, 7-benzoxazolyl, 2-benzothiazolyl, 4-benzothiazolyl, 5-benzothiazolyl, 6-benzothiazolyl, 7-benzothiazolyl, 1-indazolyl, 3-indazolyl, 4-indazolyl, 5-indazolyl, 6-indazolyl, 7-indazolyl, 2-morpholyl, 3-morpholyl, 4-morpholyl, 1-piperazyl, 2-piperazyl, 1-piperidyl, 2-piperidyl, 3-piperidyl, 4-piperidyl, 2-tetrahydropyranyl, 3-tetrahydropyranyl, 4-tetrahydropyranyl, 2-tetrahydrothiopyranyl, 3-tetrahydrothiopyranyl, 4-tetrahydrothiopyranyl, 1-pyrrolidyl, 2-pyrrolidyl, 3-pyrrolidyl, 2-tetrahydrofuranyl, 3-tetrahydrofuranyl, 2-tetrahydrothienyl, 3-tetrahydrothienyl, and the like. Among these groups, the heterocyclic group is preferably a pyridyl, furanyl, thienyl, pyrimidyl, or pyrazyl group, and is more preferably a pyridyl group.

The heterocyclic group optionally has one or more substituents at any replaceable position. Examples of the substituents include, but are not particularly limited to, halogen atoms and amino, aminoalkyl, alkoxycarbonyl, acyl, acyloxy, amide, carboxyl, carboxyalkyl, formyl, nitrile, nitro, alkyl, hydroxyalkyl, hydroxy, alkoxy, aryl, aryloxy, heterocyclic, thiol, alkylthio, arylthio, and like groups. The number of substituents is preferably 1 to 5, and more preferably 1 to 3.

The "halogen atom" as used herein includes fluorine, chlorine, bromine, and iodine atoms. Preferable halogen atoms are chlorine, bromine, and iodine atoms.

The "amino" as used herein includes an amino group represented by -NH₂ and substituted amino groups. Examples of substituted amino groups include C₁₋₆ (particularly C₁₋₄) linear or branched monoalkylamino groups, such as methylamino, ethylamino, n-propylamino, isopropylamino, n-butylamino, isobutylamino, s-butylamino, t-butylamino, 1-ethylpropylamino, n-pentylamino, neopentylamino, n-hexylamino, isohexylamino, and 3-methylpentylamino; and dialkylamino groups having two C₁₋₆ (particularly C₁₋₄) linear or branched alkyl groups, such as dimethylamino, ethlmethylamino, and diethylamino.

The "aminoalkyl" as used herein is not particularly limited. Examples include aminoalkyl groups (preferably aminocontaining linear or branched alkyl groups having 1 to 6 carbon atoms), such as aminomethyl, 2-aminoethyl, and 3-aminopropyl.

The "alkoxycarbonyl" as used herein is not particularly limited. Examples include methoxycarbonyl, ethoxycarbonyl, and the like.

The "acyl" as used herein is not particularly limited. Examples include C₁₋₄ linear or branched alkylcarbonyl groups, such as acetyl, propionyl, and pivaloyl.

The "acyloxy" as used herein is not particularly limited. Examples include acetyloxy, propionyloxy, n-butyryloxy, and the like.

The "amide" as used herein is not particularly limited. Examples include carboxylic acid amide groups, such as acetamide and benzamide; thioamide groups such as thioacetamide and thiobenzamide; N-substituted amide groups such as N-methylacetamide and N-benzylacetamide; and the like.

The "carboxyalkyl" as used herein is not particularly limited. Examples include carboxy-alkyl groups (preferably carboxy-containing alkyl groups having 1 to 6 carbon atoms), such as carboxymethyl, carboxyethyl, carboxy-n-propyl, carboxy-n-butyl, carboxy-n-pentyl, and carboxy-n-hexyl.

The "hydroxyalkyl" as used herein is not particularly limited. Examples include hydroxyalkyl groups (preferably hydroxy-containing alkyl groups having 1 to 6 carbon atoms), such as hydroxymethyl, hydroxyethyl, hydroxy-n-propyl, and hydroxy-n-butyl.

The "alkyl" as used herein is not particularly limited. Examples include linear, branched, or cyclic alkyl groups. Specific examples include C₁₋₆ (particularly C₁₋₄) linear or branched alkyl groups, such as methyl, ethyl, n-propyl, isopropyl, n-butyl, isobutyl, s-butyl, t-butyl, 1-ethylpropyl, n-pentyl, neopentyl, n-hexyl, isohexyl, and 3-methylpentyl; C₃₋₈ (particularly C₃₋₆) cyclic alkyl groups, such as cyclopropyl, cyclobutyl, cyclopentyl, cyclohexyl, cycloheptyl, and cyclooctyl; and the like.

The "hydroxyalkyl" as used herein is not particularly limited. Examples include hydroxyalkyl groups (preferably hydroxy-containing alkyl groups having 1 to 6 carbon atoms), such as hydroxymethyl, hydroxyethyl, hydroxy-n-propyl, and hydroxy-n-butyl.

The "alkoxy" as used herein is not particularly limited. Examples include linear, branched, or cyclic alkoxy groups. Specific examples include C₁₋₆ (particularly C₁₋₄) linear or branched alkoxy groups, such as methoxy, ethoxy, n-propoxy, isopropoxy, n-butoxy, t-butoxy, n-pentyloxy, neopentyloxy, and n-hexyloxy; C₃₋₈ (particularly C₃₋₆) cyclic alkoxy groups, such as cyclopropyloxy, cyclobutyloxy, cyclopenthyloxy, cyclohexyloxy, cycloheptyloxy, and cyclooctyloxy; and the like.

The "aryl" as used herein is not particularly limited. Examples include phenyl, biphenyl, naphthyl, dihydroindenyl, 9H-fluorenyl, and the like.

The "aryloxy" as used herein is not particularly limited. Examples include phenoxy, biphenyloxy, naphthoxy, and the like.

The "alkylthio" as used herein is not particularly limited. Examples include linear, branched, or cyclic alkylthio groups. Specific examples include C₁₋₆ (particularly C₁₋₄) linear or branched alkylthio groups, such as methylthio, ethylthio, n-propylthio, isopropylthio, n-butylthio, isobutylthio, s-butylthio, t-butylthio, 1-ethylpropylthio, n-pentylthio, neopentylthio, n-hexylthio, isohexylthio, and 3-methylpentylthio; C₃₋₈ (particularly C₃₋₆) cyclic alkylthio groups, such as cyclopropylthio, cyclobutylthio, cyclopentylthio, cyclohexylthio, cycloheptylthio, and cyclooctylthio; and the like.

The "arylthio" as used herein is not particularly limited. Examples include phenylthio, biphenylthio, naphthylthio, and the like.

The "salt" of the tetrazine compound represented by Formula (1) is not particularly limited and includes all types of salts. Examples of such salts include inorganic acid salts such as hydrochloride, sulfate, and nitrate; organic acid salts such as acetate and methanesulfonate; alkali metal salts such as sodium salt and potassium salt; alkaline earth metal salts such as magnesium salt and calcium salt; ammonium salts such as dimethylammonium and triethylammonium; and the like.

The tetrazine compounds (1) are preferably compounds wherein X¹ and X² are the same or different, and each represents an optionally substituted pyridyl group, an optionally substituted furanyl group, an optionally substituted thienyl group, an optionally substituted pyrazolyl group, an optionally substituted pyrimidyl group, or an optionally substituted pyrazyl group.

More preferable tetrazine compounds (1) are compounds wherein X¹ and X² are the same or different, and each represents an optionally substituted 2-pyridyl group, an optionally substituted 3-pyridyl group, an optionally substituted 4-pyridy group, an optionally substituted 2-furanyl group, an optionally substituted 2-thienyl group, an optionally substituted 1-pyrazolyl group, an optionally substituted 2-pyrimidyl group, or an optionally substituted 2-pyrazyl group. Specifically, compounds wherein X¹ and X² are the same or different, and each represents an optionally substituted 2-pyridyl group, an optionally substituted 3-pyridyl group, an optionally substituted 4-pyridyl group, or an optionally substituted 2-furanyl group are particularly preferable.

Specific examples of the tetrazine compound (1) include 3,6-bis(2-pyridyl)-1,2,4,5-tetrazine, 3,6-bis(3-pyridyl)-1,2,4,5-tetrazine, 3,6-bis(4-pyridyl)-1,2,4,5-tetrazine, 3,6-bis(2-furanyl)-1,2,4,5-tetrazine, 3,6-bis(3,5-dimethyl-1-pyrazolyl)-1,2,4,5-tetrazine, 3,6-bis(2-thienyl)-1,2,4,5-tetrazine, 3-methyl-6-(2-pyridyl)-1,2,4,5-tetrazine, 3,6-bis(2-pyrimidinyl)-1,2,4,5-tetrazine, 3,6-bis(2-pyrazyl)-1,2,4,5-tetrazine, and the like.

Among these, preferable tetrazine compounds (1) are 3,6-bis(2-pyridyl)-1,2,4,5-tetrazine, 3,6-bis(3-pyridyl)-1,2,4,5-tetrazine, 3,6-bis(2-furanyl)-1,2,4,5-tetrazine, and 3,6-bi(4-pyridyl)-1,2,4,5-tetrazine. More preferable tetrazine compounds (1) are 3,6-bis(2-pyridyl)-1,2,4,5-tetrazine, 3,6-bis(3-pyridyl)-1,2,4,5-tetrazine, and 3,6-bis(4-pyridyl)-1,2,4,5-tetrazine.

From the viewpoint of imparting rolling resistance to the rubber component, the amount of the tetrazine compound (1) is 0.1 to 10 parts by mass, per 100 parts by mass of the rubber component in the rubber composition. The amount of the tetrazine compound (1) is preferably 0.25 to 5 parts by mass, and more preferably 0.5 to 2 parts by mass, per 100 parts by mass of the rubber component in the rubber composition.

When the tetrazine compound (1) is a powder, the volume mean diameter is not particularly limited. From the viewpoint of imparting low heat build-up, the volume mean diameter is preferably 300 µm or less, more preferably 150 um or less, and particularly preferably 75 µm or less.

The volume mean diameter can be determined as a particle diameter corresponding to 50% on the cumulative size distribution curve from the volume-based particle size distribution by using a particle size distribution analyzer based on laser optical diffraction or the like.

Further, from the viewpoint of the handling at the time of use and of reducing the ignition or explosion risk, the powder may be surface-treated with oil, a resin, a stearic acid, or the like, or the powder may be used by mixing with, for example, a filler, such as calcium carbonate and silica.

The rubber composition of the present invention further comprises a processing aid, and the processing a is at least one member selected from the group consisting of fatty acid metal salts having 8 or more carbon atoms, fatty acid amides having 8 or more carbon atoms, and fatty acid hydrazides having 8 or more carbon atoms.

Examples of the processing aid, which do not form part of the invention, include surfactants, hydrocarbon processing aids, resin processing aids, glycol processing aids, silane processing aids, vegetable-oil-and-fat processing aids, mineral fillers, non-mineral fillers, and the like.

Examples of surfactants, which do not form part of the invention, include anionic surfactants, cationic surfactants, non-ioninc surfactants, and ampholytic surfactants. Among these, anionic surfactants are preferable. Examples of anionic surfactants include metal salts of saturated fatty acids, such as caprylic acid, pelargonic acid, capric acid, undecylic acid, lauric acid, myristic acid, palmitic acid, stearic acid, 12-hydroxystearic acid, montanic acid, and behenic acid. Examples of metals that form metal salts include alkali metals, such as sodium, lithium, and potassium; alkaline earth metals, such as magnesium, calcium, and barium; zinc; aluminum; and the like. Among these anionic surfactants, lauric acid metal salt, stearic acid metal salt are preferable, and sodium laurate and sodium stearate are particularly preferable.

Examples of hydrocarbon processing aids, which do not form part of the invention, include mineral oil, petrolatum, paraffin wax, petroleum resin, polyethylene, polybutene, liquid isoprene rubber, liquid butadiene rubber, liquid styrene butadiene rubber, and the like.

Examples of fatty acid processing aids, which do not form part of the invention, include fatty acids, fatty acid esters, fatty alcohols,
fatty acid esters of hydrogenated or non-hydrogenated C5 and C6 saccharides, polyoxyethylene derivatives of fatty acid esters, and the like.

Examples of fatty acid metal salts
having 8 or more carbon atoms
include saturated fatty acid metal salts, such as caprylic acid metal salt, pelargonic acid metal salt, capric acid metal salt, undecylic acid metal salt, lauric acid metal salt, myristic acid metal salt, palmitic acid metal salt, stearic acid metal salt, 12-hydroxystearic acid metal salt, montanic acid metal salt, and behenic acid metal salt; and unsaturated fatty acid metal salts, such as oleic acid metal salt, linoleic acid metal salt, and linolenic acid metal salt. Examples of metals forming metal salts include alkali metals, such as lithium, sodium, and potassium; alkaline earth metals, such as magnesium, calcium, and barium; zinc; aluminum; and the like. Among these fatty acid metal salts, fatty acid metal salts having 10 or more carbon atoms are preferable, saturated fatty acid metal salts having 10 or more carbon atoms are more preferable, lauric acid metal salt, stearic acid metal salt are still more preferable, and sodium laurate and sodium stearate are particularly preferable.

Examples of fatty acid amides
having 8 or more carbon atoms
include saturated fatty acid amide, such as caprylic acid amide, pelargonic acid amide, capric acid amide, undecylic acid amide, lauric acid amide, lauroyl sarcosine, myristic acid amide, palmitic acid amide, stearic acid amide, 12-hydroxystearic acid amide, montanic acid amide, and behenic acid amide; and unsaturated fatty acid amides, such as oleic acid amide, linoleic acid amide, and linolenic acid amide. Among these fatty acid amides, fatty acid amides having 10 or more carbon atoms are preferable, saturated fatty acid amides having 10 or more carbon atoms are more preferable, lauric acid amide, lauroyl sarcosine, and stearic acid amide are still more preferable, and lauric acid amide and lauroyl sarcosine are particularly preferable.

Examples of fatty acid hydrazides
having 8 or more carbon atoms
include saturated fatty acid hydrazides, such as caprylic acid hydrazide, pelargonic acid hydrazide, capric acid hydrazide, undecylic acid hydrazide, lauric acid hydrazide, myristic acid hydrazide, palmitic acid hydrazide, stearic acid hydrazide, 12-hydroxy stearic acid hydrazide, montanic acid hydrazide, and behenic acid hydrazide; and unsaturated fatty acid hydrazides, such as oleic acid hydrazide, linoleic acid hydrazide, and linolenic acid hydrazide. Among these fatty acid hydrazides, fatty acid hydrazides having 10 or more carbon atoms are preferable, saturated fatty acid hydrazides having 10 or more carbon atoms are more preferable, and lauric acid hydrazide and stearic acid hydrazide are even more preferable.

Examples of resin processing aids, which do not form part of the invention, include phenolic resins and the like.

Examples of glycol processing aids, which do not form part of the invention, include diethylene glycol, polyethylene glycol, and the like.

**Examples of silane processing aids, which do not form part of the invention, include** monofunctional compounds that chemically react with the surface silanol groups on silica particles but do not react with elastomers; a shielding agent that physically covers silanol groups and inhibits reaggregation or agglomeration of silica particles; and the like. Specific examples of such silane processing aids include alkylalkoxysilanes, such as methyltrimethoxysilane, dimethyldimethoxysilane, and methyltriethoxysilane. These silane processing aids may be used in place of all or some of the bifunctional silane coupling agents.

**Examples of vegetable-oil-and-fat processing aids, which do not form part of the invention,** include pine oil, pine tar, factice (rubber substitutes), and the like.

**Examples of mineral fillers, which do not form part of the invention, include talc, calcium** carbonate, mica, and the like.

**Examples of non-mineral fillers, which do not form part of the invention, include dry silica,** gel-like particles, and the like.

These processing aids may be used alone or in a combination of two or more.

The amount of the processing aid is usually 1 to 10 parts by mass, preferably 2 to 6 parts by mass, and more preferably 2 to 5 parts by mass, per 100 parts by mass of the rubber component. When being incorporated, the processing aid may be used alone as is. Alternatively, for the purpose of improving handling properties at the time of use and reducing the ignition or explosion risk, the processing aid may be used in the form of a composition by mixing with the tetrazine compound (1) beforehand. That is, a composition for use in the production of a tire, the composition comprising the tetrazine compound represented by Formula (1) or a salt thereof and a processing aid, may be used. This composition may further comprise at least one member selected from the group consisting of oil, resins, stearic acid, calcium carbonate, and silica.

The rubber composition of the present invention preferably further comprises an inorganic filler and/or carbon black, in addition to the above rubber component, tetrazine compound (1), and processing aid.

The amount of the inorganic filler is usually 20 to 150 parts by mass, preferably 30 to 120 parts by mass, and more preferably 40 to 90 parts by mass, per 100 parts by mass of the rubber component.

The amount of the carbon black is usually 2 to 150 parts by mass, preferably 4 to 120 parts by mass, and more preferably 6 to 100 parts by mass, per 100 parts by mass of the rubber component.

In the rubber composition of the present invention, the amounts of he inorganic filler and/or carbon black may be suitably adjusted within the above amount ranges of each component so that the total amount of both components, i.e., the inorganic filler and/or carbon black, is, for example, usually 30 to 150 parts by mass, preferably 40 to 130 parts by mass, and more preferably 45 to 100 parts by mass, per 100 parts by mass of the rubber component.

Incorporating the inorganic filler and/or carbon black in a total amount of 30 parts by mass or more is preferable from the viewpoint of the steering stability of the rubber composition, whereas incorporating the inorganic filler and/or carbon black in a total amount of 150 parts by mass or less is preferable from the viewpoint of reducing the rolling resistance. When an inorganic filler and/or carbon black is used, a master batch polymer prepared by wet or dry mixing the inorganic filler and/or carbon black with the polymer beforehand may be used.

### Inorganic Filler

The inorganic filler is not particularly limited as long as it is an inorganic compound usually used in the rubber industry. Examples of usable inorganic compounds include silica; aluminas (Al₂O₃) such as γ-alumina and α-alumina; alumina monohydrates (Al₂O₃·H₂O) such as boehmite and diaspore; aluminum hydroxides [Al(OH)₃] such as gibbsite and bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO-8SiO₂·9H₂O), titanium white (TiO₂), titanium black (TiO₂ₙ₋₁), calcium oxide (CaO), calcium hydroxide [Ca(OH)₂], magnesium aluminum oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicates (Al₂SiO₅, Al₄·3SiO₄·5H₂O, etc.), magnesium silicates (Mg₂SiO₄, MgSiO₃, etc.), calcium silicates (Ca₂·SiO₄, etc.), aluminum calcium silicates (Al₂O₃·CaO·2SiO₂, etc.), magnesium calcium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and crystalline aluminosilicates containing hydrogen, alkali metal, or alkaline earth metal that compensate charge, such as various types of zeolites. To enhance affinity to the rubber component, the surface of these inorganic fillers may be treated with an organic compound.

Adding silica is preferable because it can improve rubber strength. As silica, any type of commercially available products can be used. Among these, wet silica, dry silica, or colloidal silica is preferable, and wet silica is more preferable. To enhance affinity to the rubber component, the surface of the inorganic filler may be treated with an organic compound.

Among these, the inorganic filler is preferably silica from the viewpoint of rolling resistance. The BET specific surface area of silica is not particularly limited and may be, for example, in the range of 40 to 350 m²/g. Silica that has a BET specific surface area within this range is advantageous in that rubber reinforcement and dispersibility in the rubber component can both be achieved. The BET specific surface area is measured according to ISO 5794/1.

From this viewpoint, preferred is silica having a BET specific surface area of 50 to 250 m²/g, more preferred is silica having a BET specific surface area of 80 to 230 m²/g, and particularly preferred is silica having a BET specific surface area of 110 to 210 m²/g.

Examples of commercially available products of such silica include products under the trade names of: HD165MP (BET specific surface area: 165 m²/g), HD115MP (BET specific surface area: 115 m²/g), HD200MP (BET specific surface area: 200 m²/g), and HD250MP (BET specific surface area: 250 m²/g), all produced by Quechen Silicon Chemical Co., Ltd.; Nipsil AQ (BET specific surface area: 205 m²/g) and Nipsil KQ (BET specific surface area: 240 m²/g), both produced by Tosoh Silica Corporation; Ultrasil VN3 (BET specific surface area: 175 m²/g) produced by Degussa AG; Z1085Gr (BET specific surface area: 90 m²/g), Z Premium200MP (BET specific surface area: 215 m²/g), and Z HRS 1200MP (BET specific surface area: 200 m²/g), all produced by Solvay; and the like.

The amount of silica is usually 20 to 120 parts by mass, preferably 30 to 100 parts by mass, and more preferably 40 to 90 parts by mass, per 100 parts by mass of the rubber component.

### Carbon Black

The carbon black for use is not particularly limited. For example, commercially available carbon blacks, carbon-silica dual phase fillers, and the like can be used.

Specific examples of carbon blacks include high-, middle- or low-structure SAF, ISAF, IISAF, N110, N134, N220, N234, N330, N339, N375, N550, HAF, FEF, GPF, or SRF-grade carbon black, and the like. Among these, SAF, ISAF, IISAF, N134, N234, N330, N339, N375, HAF, or FEF-grade carbon black is preferable.

There is no particular limitation on the DBP absorption of the carbon black. The carbon black preferably has a DBP absorption of 60 to 200 cm³/100 g, more preferably 70 to 180 cm³/100 g, and particularly preferably 80 to 160 cm³/100 g.

The carbon black preferably has a nitrogen adsorption specific surface area (N2SA, measured according to JIS K6217-2: 2001) of 30 to 200 m²/g, more preferably 40 to 180 m²/g, and particularly preferably 50 to 160 m²/g.

Incorporation of the tetrazine compound (1) in the rubber composition that contains carbon black significantly increases the dispersibility of carbon black and reduces heat build-up of the rubber composition.

### Other Ingredients

In addition to the tetrazine compound (1), the processing aid, and the inorganic filler and/or carbon black, the rubber composition of the present invention may comprise ingredients usually used in the rubber industry, such as vulcanizing agents including sulfur. The rubber composition of the present invention may further comprise other ingredients, such as antioxidants, ozone protectants, softeners, waxes, resins, foaming agents, oils, stearic acid, zinc oxide (ZnO), vulcanization accelerators, and vulcanization retarders. These ingredients may be incorporated as long as they do not impair the object of the present invention. As such ingredients, commercially available products can be suitably used.

Further, a silane coupling agent may be incorporated into the rubber composition that comprises an inorganic filler, such as silica, for the purpose of enhancing the rubber composition reinforcement by silica, or enhancing wear resistance and reducing rolling resistance of the rubber composition.

The silane coupling agent that can be used with an inorganic filler is not particularly limited, and commercially available products can be suitably used. Examples of such silane coupling agents include sulfide, polysulfide, thioester, thiol, olefin, epoxy, amino, or alkyl silane coupling agents.

Examples of sulfide silane coupling agents include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, bis(2-monoethoxydimethylsilylethyl)disulfide, and the like. Among these, bis(3-triethoxysilylpropyl)tetrasulfide is particularly preferable.

Examples of thioester silane coupling agents include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, and the like.

Examples of thiol silane coupling agents include 3-mercaptopropyltrimethoxysilane, 3-mercaptopropyltriethoxysilane, 3-mercaptopropylmethyldimethoxysilane, 3-[ethoxybis(3,6,9,12,15-pentaoxaoctacosan-1-yloxy)silyl]-1-propanethiol, and the like.

Examples of olefin silane coupling agents include dimethoxymethylvinylsilane, vinyltrimethoxysilane, dimethylethoxyvinylsilane, diethoxymethylvinylsilane, triethoxyvinylsilane, vinyltris(2-methoxyethoxy)silane, allyltrimethoxysilane, allyltriethoxysilane, p-styryltrimethoxysilane, 3-(dimethoxymethylsilyl)propyl acrylate, 3-(trimethoxysilyl)propyl acrylate, 3-[dimethoxy(methyl)silyl]propyl methacrylate, 3-(trimethoxysilyl)propyl methacrylate, 3-[diethoxy(methyl)silyl]propyl methacrylate, 3-(triethoxysilyl)propyl methacrylate, 3-[tris(trimethylsiloxy)silyl]propyl methacrylate, and the like.

Examples of epoxy silane coupling agents include 3-glycidyloxypropyl(dimethoxy)methylsilane, 3-glycidyloxypropyltrimethoxysilane, diethoxy(3-glycidyloxypropyl)methylsilane, triethoxy(3-glycidyloxypropyl)silane, 2-(3,4-epoxycyclohexyl)ethyltrimethoxysilane, and the like. Among these, 3-glycidyloxypropyltrimethoxysilane is preferable.

Examples of amino silane coupling agents include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-ethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane, and the like. Among these, 3-aminopropyltriethoxysilane is preferable.

Examples of alkyl silane coupling agents include methyltrimethoxysilane, dimethyldimethoxysilane, trimethylmethoxysilane, methyltriethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, n-decyltrimethoxysilane, and the like. Among these, methyltriethoxysilane is preferable.

Among these silane coupling agents, bis(3-triethoxysilylpropyl)tetrasulfide, bis(3-triethoxysilylpropyl)disulfide, and 3-[ethoxybis(3,6,9,12,15-pentaoxaoctacosan-1-yloxy)silyl]-1-propanethiol can be particularly preferably used.

In the present invention, silane coupling agents may be used singly or in a combination of two or more.

The amount of silane coupling agent in the rubber composition of the present invention is preferably 0.1 to 20 parts by mass, and particularly preferably 3 to 15 parts by mass, per 100 parts by mass of the inorganic filler. This is because 0.1 parts by mass or more of a silane coupling agent can more advantageously achieve reduced rolling resistance of the rubber composition, whereas 20 parts by mass or less of a silane coupling agent can reduce the cost of the rubber composition and increase economic efficiency.

### Use of Rubber Composition

The use of the rubber composition of the present invention is not particularly limited. For example, the rubber composition can be used for tires, vibration-proof rubber, conveyor belts, seismic isolation rubber, rubber parts of these components, and the like. Among these, the rubber composition of the present invention is preferably used for tires.

### Method for Producing the Rubber Composition

The method for producing the rubber composition of the present invention is not particularly limited. The method for producing the rubber composition of the present invention comprises the steps of: (I) kneading raw material ingredients including the rubber component, the tetrazine compound (1), the processing aid, and optionally the inorganic filler and/or carbon black; and (II) kneading the mixture obtained in step (I) and a vulcanizing agent.

### Step (I)

Step (I) is a step of kneading raw material ingredients including the rubber component, the tetrazine compound (1), the processing aid, and optionally the inorganic filler and/or carbon black. Step (I) refers to the step before incorporating a vulcanizing agent.

In step (I), other ingredients as mentioned above etc. can also optionally be incorporated.

The kneading method in step (I) may be, for example, a method of kneading a composition comprising the rubber component, the tetrazine compound (1), the processing aid, and optionally the inorganic filler and/or carbon black. In this kneading method, the entire amount of each ingredient may be kneaded at once, or each ingredient may be added in portions according to the intended purpose, such as viscosity adjustment, and kneaded. Alternatively, after kneading the rubber component, the processing aid, and optionally the inorganic filler and/or carbon black, the tetrazine compound (1) may be added and kneaded; or, after kneading the rubber component and the tetrazine compound (1), the processing aid and optionally the inorganic filler and/or carbon black may be added and kneaded. In step (I), the kneading operation may be repeatedly performed several times.

The temperature of mixing the rubber composition in step (I) is not particularly limited. For example, the upper limit of the temperature of the rubber composition is preferably 120 to 190°C, more preferably 130 to 175°C, and still more preferably 140 to 170°C.

The mixing time in step (I) is not particularly limited. For example, the mixing time is preferably 10 seconds to 20 minutes, more preferably 30 seconds to 10 minutes, and more preferably 2 to 7 minutes.

In step (I), the tetrazine compound (1) is incorporated in an amount of 0.1 to 10 parts by mass, per 100 parts by mass of the rubber component. The amount of the tetrazine compound (1) is preferably 0.25 to 5 parts by mass, and more preferably 0.5 to 2 parts by mass, per 100 parts by mass of the rubber component.

In step (I), the processing aid is usually incorporated in an amount of 1 to 10 parts by mass, per 100 parts by mass of the rubber component. The amount of the processing aid is preferably 2 to 6 parts by mass, and more preferably 2 to 5 parts by mass.

In step (I), the amount of the inorganic filler, when incorporated, is usually 20 to 150 parts by mass, preferably 30 to 120 parts by mass, and more preferably 40 to 90 parts by mass, per 100 parts by mass of the rubber component.

In step (I), the amount of the carbon black, when incorporated, is usually 2 to 150 parts by mass, preferably 4 to 120 parts by mass, and more preferably 6 to 100 parts by mass, per 100 parts by mass of the rubber component.

In step (I), the amounts of the inorganic filler and/or carbon black are suitably adjusted within the above ranges so that the total amount of the inorganic filler and/or carbon black is usually 30 to 150 parts by mass, per 100 parts by mass of the rubber component.

Another example of the kneading method in step (I) is a two-step kneading method comprising the steps of (I-1) kneading the rubber component and the tetrazine compound (1); and (I-2) kneading the mixture (modified polymer) obtained in step (I-1), the processing aid, and optionally the inorganic filler and/or carbon black.

In step (I-1), examples of the method for kneading the rubber component and the tetrazine compound (1) are as follows. When the rubber component is a solid, for example, a method comprising kneading the rubber component with the tetrazine compound (1) (a kneading method) can be used. When the rubber component is in a liquid form (a liquid), for example, a method comprising mixing a solution or emulsion (suspension) of the rubber component with the tetrazine compound (1) (a liquid mixing method) can be used.

The kneading temperature is not particularly limited. For example, when the kneading method is used, the upper limit of the temperature of the rubber component is preferably 80 to 190°C, more preferably 90 to 160°C, and still more preferably 100 to 150°C. When the liquid mixing method is used, the upper limit of the temperature of the rubber component is preferably 80 to 170°C, more preferably 90 to 160°C, and still more preferably 100 to 150°C.

The mixing time or kneading time is not particularly limited. For example, when the kneading method is used, the kneading time is preferably 10 seconds to 20 minutes, more preferably 30 seconds to 10 minutes, and still more preferably 60 seconds to 7 minutes. When the liquid mixing method is used, the mixing time is preferably 10 seconds to 60 minutes, more preferably 30 seconds to 40 minutes, and still more preferably 60 seconds to 30 minutes. After the mixing reaction is performed by the liquid mixing method, for example, the solvent is evaporated (removed) from the mixture under reduced pressure, and a solid rubber composition is collected.

In step (I-1), the tetrazine compound (1) is incorporated in an amount of 0.1 to 10 parts by mass, per 100 parts by mass of the rubber component. The amount of the tetrazine compound (1) is preferably 0.25 to 5 parts by mass, and more preferably 0.5 to 2 parts by mass, per 100 parts by mass of the rubber component.

In step (I-1), in which the rubber component and the tetrazine compound (1) are kneaded, the double bonds of a diene rubber in the rubber component react with the tetrazine compound (1) to form a modified polymer.

In step (I-2), the temperature of mixing the mixture (modified polymer) obtained in step (I-1) and the processing aid is not particularly limited. For example, the upper limit of the temperature of the mixture is preferably 120 to 190°C, more preferably 130 to 175°C, and still more preferably 140 to 170°C.

In step (I-2), the mixing time is not particularly limited. For example, the mixing time is preferably 10 seconds to 20 minutes, more preferably 30 seconds to 10 minutes, and still more preferably 2 to 7 minutes.

In step (I-2), the processing aid is usually incorporated in an amount of 1 to 10 parts by mass, per 100 parts by mass of the mixture (modified polymer) obtained in step (I-1). The amount of the processing aid is preferably 2 to 6 parts by mass, and more preferably 2 to 5 parts by mass.

In step (I-2), the amount of the inorganic filler, when incorporated, is usually 20 to 150 parts by mass, preferably 30 to 120 parts by mass, and more preferably 40 to 90 parts by mass, per 100 parts by mass of the mixture (modified polymer) obtained in step (1-1).

In step (I-2), the amount of the carbon black, when incorporated, is usually 2 to 150 parts by mass, preferably 4 to 120 parts by mass, and more preferably 6 to 100 parts by mass, per 100 parts by mass of the mixture (modified polymer) obtained in step (I-1).

In step (I-2), the amounts of the inorganic filler and/or carbon black are suitably adjusted within the above ranges so that the total amount of the inorganic filler and/or carbon black is usually 30 to 150 parts by mass, per 100 parts by mass of the mixture (modified polymer) obtained in step (I-1).

In step (I), the double bond sites of the rubber component (diene rubber) react with the tetrazine compound (1) to form a modified polymer, and a mixture in which the processing aid and optionally the inorganic filler and/or carbon black are suitably dispersed is obtained.

### Step (II)

Step (II) is a step of mixing the mixture obtained in step (I) and a vulcanizing agent. Step (II) refers to the final stage of kneading.

In step (II), a vulcanization accelerator etc. can also be optionally added.

The mixing (or kneading) temperature in step (II) is not particularly limited. The temperature is preferably, for example, 60 to 140°C, more preferably 80 to 120°C, and still more preferably 90 to 120°C.

The mixing (or kneading) time is not particularly limited. For example, the mixing time is preferably 10 seconds to 20 minutes, more preferably 30 seconds to 10 minutes, and still more preferably 60 seconds to 5 minutes.

Before proceeding with the process to step (II) from step (I), it is preferable to reduce the temperature by 30°C or more from the temperature after completion of the preceding step (step (I)), and then allow the process to proceed to the following step (step (II)).

In the method for producing the rubber composition of the present invention, various ingredients usually incorporated in the rubber composition, for example, stearic acid, vulcanization accelerators such as zinc oxide, and antioxidants, may be optionally added in step (I) or (II).

Step (I) and step (II) above are capable of producing a rubber composition comprising a modified polymer obtained by treating the tetrazine compound (1) with a diene rubber in the rubber component; the processing aid; and optionally the inorganic filler and/or carbon black.

The rubber composition of the present invention encompasses both a composition comprising the rubber component, the tetrazine compound (1), the processing aid, and optionally the inorganic filler and/or carbon black; and a rubber composition comprising a modified polymer obtained by treating the tetrazine compound (1) with a diene rubber in the rubber component, the processing aid, and optionally the inorganic filler and/or carbon black.

The modified polymer formed in step (I) or (I-1) is produced in accordance with the reactions shown in the following Reaction Scheme-1 to Reaction Scheme-4:

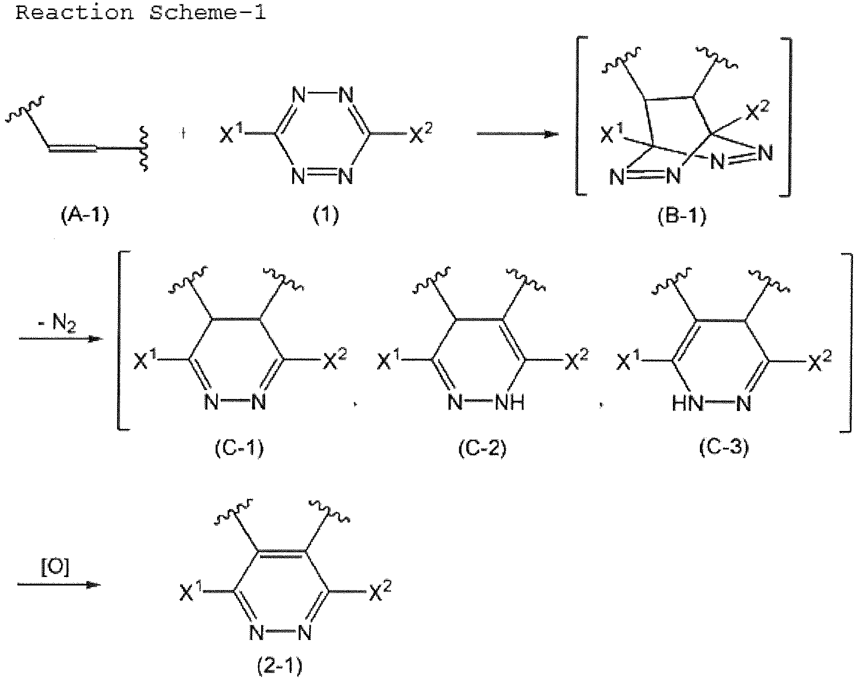

In the above scheme, X¹ and X² are as defined above.

In Reaction Scheme-1, the inverse-electron-demand Aza-Diels-Alder reaction between the double bond sites of a diene rubber represented by formula (A-1) and the tetrazine compound (1) forms bicyclic ring structures represented by formula (B-1). Denitrogenation in the -N=N- portions of the bicyclic ring structure easily proceeds to form six-membered ring structures represented by the formulas (C-1), (C-2), and/or (C-3). The obtained structures are further oxidized with oxygen in the air to produce a modified polymer having six-membered ring structures represented by formula (2-1).

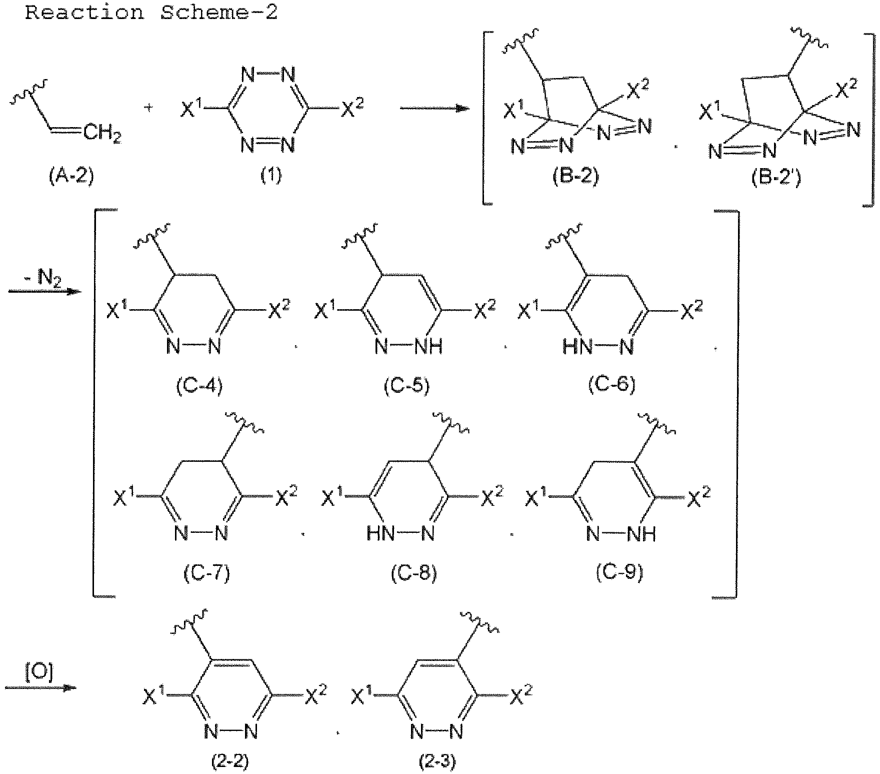

In the above reaction scheme, X¹ and X² are as defined above.

In Reaction Scheme-2, as in Reaction Scheme-1, the reaction between the double bond sites of a diene rubber represented by formula (A-2) and the tetrazine compound (1) forms bicyclic ring structures represented by formulas (B-2) and/or (B-2'). After six-membered ring structures represented by formulas (C-4) to (C-9) are then formed, a modified polymer having six-membered structures represented by formulas (2-2) and/or (2-3) is produced.

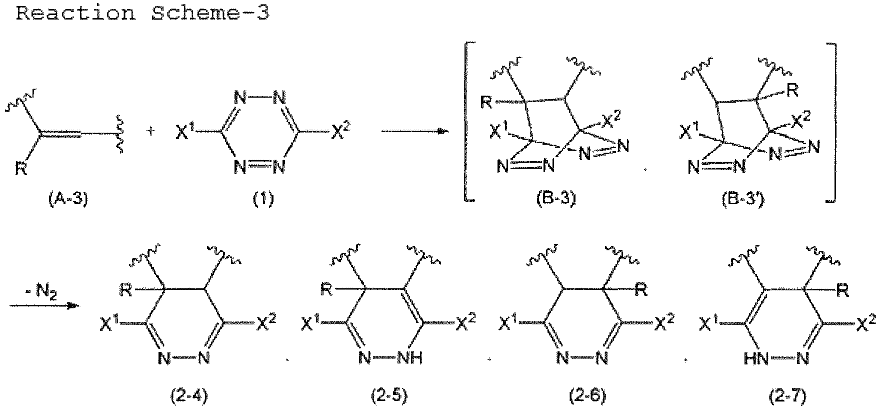

In the above reaction scheme, X¹ and X² are as defined above, and R is alkyl or a halogen atom.

In Reaction Scheme-3, after the inverse-electron-demand Aza-Diels-Alder reaction between the double bond sites of a diene rubber represented by formula (A-3) and the tetrazine compound (1) forms bicyclic ring structures represented by formulas (B-3) and/or (B-3'), nitrogen molecules are released from the structures to produce a modified polymer having six-membered ring structures represented by formulas (2-4) to (2-7). Further, when R on the double bond site of the diene rubber represented by formula (A-3) is a halogen atom, the halogen atom can possibly be eliminated. In that case, a modified polymer having six-membered ring structures represented by formula (2-1) is produced by an oxidation reaction.

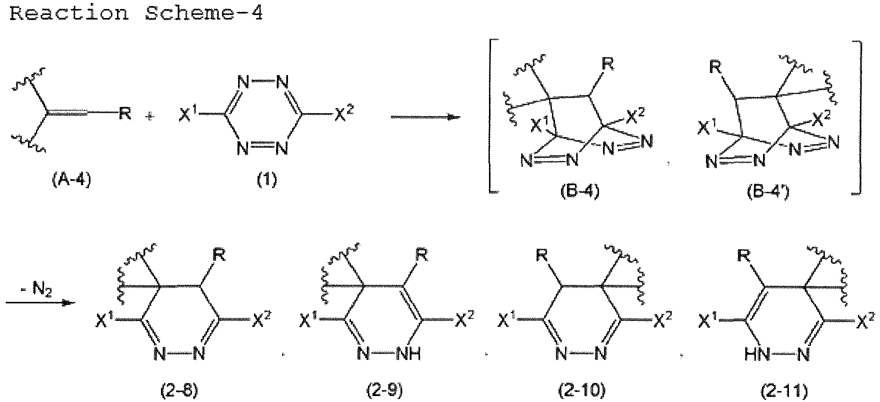

In the above reaction scheme, X¹, X², and R are as defined above.

In Reaction Scheme-4, as in the reaction shown in Reaction Scheme-3, after the reaction between the double bond sites of a diene rubber represented by formula (A-4) and the tetrazine compound (1) forms bicyclic ring structures represented by formulas (B-4) and/or (B-4'), a modified polymer having six-membered ring structures represented by formulas (2-8) to (2-11) is produced.

The thus-produced modified polymer contains heteroatoms, such as nitrogen. These heteroatoms interact strongly with an inorganic filler (in particular, silica) and carbon black, thus enhancing the dispersibility in the rubber composition and achieving further reduced rolling resistance.

The rubber composition of the present invention encompasses a rubber composition comprising a modified polymer produced by a reaction of the double bonds of the rubber component, in particular a diene rubber, with the tetrazine compound (1), preferably a modified polymer having at least one chemical structure selected from those represented by the following formulas (2-1) to (2-11).

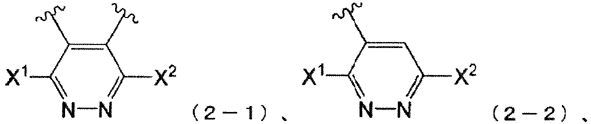

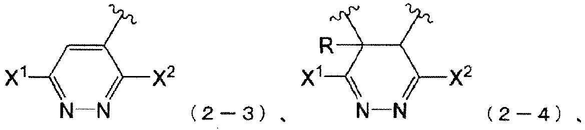

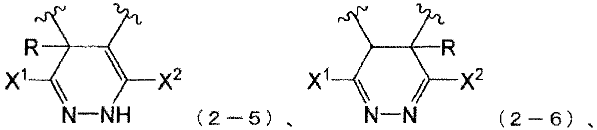

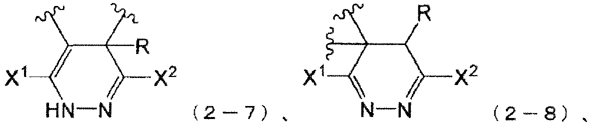

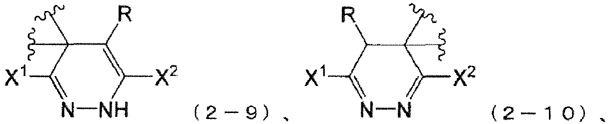

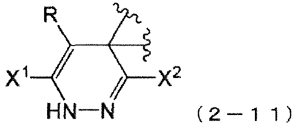

In the above formulas, X¹ and X² are as defined above.

### 3. Tire

The tire of the present invention is produced using the rubber composition of the present invention.

Examples of the tire of the present invention include pneumatic tires (such as radial-ply tires and bias tires), solid tires, and the like.

The use of the tire is not particularly limited. Examples include passenger car tires, heavy-duty tires, motorcycle tires, studless tires, and the like. Among these, the tire of the present invention is preferably used as passenger car tires.

The shape, structure, size, and material of the tire of the present invention are not particularly limited, and can be appropriately selected according to the purpose.

In the tire of the present invention, the above rubber composition is used particularly for at least one member selected from tread, sidewall, bead area, belt, carcass, and shoulder portions.

Among these, according to one preferable embodiment, a tire tread or sidewall portion of a pneumatic tire is formed using the rubber composition.

The "tire tread" is a portion that has a tread pattern and comes into direct contact with the road surface. The tire tread refers to a tire casing portion for protecting the carcass and preventing wear and flaws, and refers to a cap tread that constitutes the grounding part of a tire and/or to a base tread that is disposed inside the cap tread.

The "sidewall" refers to, for example, a portion from the lower side of a shoulder portion to a bead portion of a pneumatic radial-ply tire. Sidewall portions protect the carcass and are bent the most when the vehicle drives.

The "bead area" portions function to anchor both ends of carcass cords and simultaneously hold the tire to the rim. Beads are composed of bundles of high carbon steel.

The "belt" refers to a reinforcing band disposed between the carcass and the tread of a radial structure in the circumferential direction. The belt tightens the carcass like a hoop of a barrel to enhance the rigidity of the tread.

The "carcass" refers to a cord layer portion that forms the framework of the tire. The carcass plays a role in bearing the load, impact, and filled air pressure applied to the tire.

The "shoulder" refers to a shoulder portion of the tire. Shoulder portions play a role in protecting the carcass.

The tire of the present invention can be produced by methods known in the field of tires.

The tire may be filled with ordinary air, or air having an adjusted oxygen partial pressure; or an inert gas, such as nitrogen, argon, or helium.

### Examples

The present invention is described below more specifically with reference to Production Examples and Examples. However, the following examples are only illustrative, and are not intended to limit the present invention to these.

### Production Example 1: Production of 3,6-bis(3-pyridyl)-1,2,4,5-tetrazine (Compound a)

24 g (0.23 mol) of 3-cyanopyridine, 15 g (1.3 equivalents) of hydrazine hydrate, and 48 mL of methanol were placed in a 200-mL four-necked flask and stirred at room temperature. Subsequently, 3.6 g (15 wt.%) of sulfur was added to this mixture, a reflux condenser was attached to the flask, and the mixture was stirred overnight while heating at an outside temperature of 70°C. The reaction mixture was cooled with ice, and crystals were filtered and washed with a small amount of cold methanol. Crude crystals were dried under reduced pressure to obtain 19 g of orange dihydrotetrazine crude crystals.

17.8 g of the obtained crude crystals were dissolved in 178 g (40 equivalents) of acetic acid, and sulfur was removed by filtration. The resulting solution of dihydrotetrazine in acetic acid and 178 mL of distilled water were placed in a 1-L four-necked recovery flask, and the mixture was stirred under ice cooling. A solution of 15.5 g (3 equivalents) of sodium nitrite in 35 mL of distilled water was prepared and added dropwise to the reaction mixture over a period of about 1 hour. The resulting mixture was stirred overnight at room temperature. The precipitated crystals were filtered and neutralized with a 100 aqueous sodium bicarbonate solution to obtain crude crystals. The crude crystals were purified through a silica gel column (ethyl acetate) to obtain 8.4 g of the titled tetrazine compound (a) (red-purple, acicular crystals).
Melting point: 200°C
¹H-NMR (300 MHz, CDCl₃, δ ppm) :
   7.59 (ddd, J = 0.9, 5.1, 7.8 Hz, 2 H), 8.89-8.96 (m, 4 H), 9.88 (dd, J = 0.9, 2.4 Hz, 2 H)

### Production Example 2: Production of Lauric Acid Hydrazide

50.0 g of methyl laurate, 77.8 mL of ethanol, and 28.3 mL of hydrazine monohydrate were placed in a 500-mL recovery flask and heated to reflux for 18 hours, followed by cooling to room temperature. The precipitated crystals were filtered and washed with methanol to obtain 46.2 g of lauric acid hydrazide (white solid).

### Examples 1 to 11 and Comparative Examples 1 and 2

The components shown in step (I) of Tables 1 and 2 below were mixed in the proportions (parts by weight) shown in the tables and kneaded using a Banbury mixer for 5 minutes, while adjusting the number of rotations so that the maximum temperature of the mixture was 160°C. After the obtained mixture was allowed to rest until the temperature of the mixture was reduced to 80°C or lower, the components shown in step (II) of Tables 1 and 2 were added in the proportions (parts by weight) shown in the tables to the mixer and kneaded while controlling the temperature so that the maximum temperature of the mixture did not exceed 110°C. Each rubber composition was thus obtained.

### Processability Test

With respect to the rubber compositions produced in Examples 1 to 11 and Comparative Examples 1 and 2 (test compositions), the Mooney viscosity ML (1+4) was determined in accordance with JIS K6300 by using an L-shaped rotor under the temperature condition of 100°C.

The rubber composition produced in Comparative Example 1 was used as a reference, and processability indices were calculated using the following formula. A larger value represents more excellent processability.

Tables 1 and 2 show the results. Processability index = { (Mooney viscosity of the reference) / (Mooney viscosity of a test composition) } × 100

### Steering Stability Test

With respect to the rubber compositions produced in Examples 1 to 11 and Comparative Examples 1 and 2 (test compositions), a tension test was performed in accordance with JIS K6251 "Rubber, vulcanized or thermoplastic - Determination of tensile stress-strain properties" under the temperature condition of at 23°C by using No. 3 dumbbell-shaped test pieces prepared from each vulcanized rubber sheet for testing to measure the modulus (M) at 300% elongation.

The rubber composition produced in Comparative Example 1 was used as a reference, and the steering stability indices were calculated using the following formula. A larger value represents more excellent steering stability.

Table 1 and 2 show the results. Steering stability index = { (M300 of a test composition) / (M300 of the reference) } × 100

### Rolling Resistance (tanδ index) Test

With respect to the rubber compositions produced in Examples 1 to 11 and Comparative Examples 1 and 2 (test compositions), tanδ was measured at a temperature of 40°C, a dynamic strain of 50, and a frequency of 15 Hz by using a viscoelasticity measuring device (Metravib).

The rubber composition produced in Comparative Example 1 was used as a reference, and the rolling resistance indices were calculated using the following formula.

A larger rolling resistance index value represents more reduced rolling resistance. The rolling resistance index of the vulcanized rubber composition of each reference was determined as 100.

Table 1 and 2 show the results. Rolling resistance index = { (tanδ of the reference) / (tanδ of a test composition) } × 100

**Table 1**

| | | | Comp. Ex. | | Ex. | | | | | | |
|---|---|---|---|---|---|---|---|---|---|---|---|
| | | | 1 | 2 | 1 | 2 | 3 | 4 | 5 | 6 | 7 |
| Components of the rubber composition | Step (I) | SBR*¹ | 50 | 50 | 50 | 50 | 50 | 50 | 50 | 50 | 50 |
| | | SBR*² | 20 | 20 | 20 | 20 | 20 | 20 | 20 | 20 | 20 |
| | | BR*³ | 20 | 20 | 20 | 20 | 20 | 20 | 20 | 20 | 20 |
| | | NR*⁴ | 10 | 10 | 10 | 10 | 10 | 10 | 10 | 10 | 10 |
| | | Silica*⁵ | 85 | 85 | 85 | 85 | 85 | 85 | 85 | 85 | 40 |
| | | Silica*⁶ | | | | | | | | | 55 |
| | | Silane coupling agent*⁷ | 6.8 | 6.8 | 6.8 | 6.8 | 6.8 | 6.8 | 6.8 | 6.8 | 6.8 |
| | | Carbon black*⁸ | 5 | 5 | 5 | 5 | 5 | 5 | 5 | 5 | 5 |
| | | Processing aid*⁹ | | 4 | 4 | | | | 4 | 4 | 4 |
| | | Processing aid*¹⁰ | | | | 4 | | | | | |
| | | Processing aid*¹¹ | | | | | 4 | | | | |
| | | Processing aid*¹² | | | | | | 4 | | | |
| | | Antioxidant*¹³ | 3 | 3 | 3 | 3 | 3 | 3 | 3 | 3 | 3 |
| | | Zinc oxide*¹⁴ | 2 | 2 | 2 | 2 | 2 | 2 | 2 | 2 | 2 |
| | | Stearic acid*¹⁵ | 2 | 2 | 2 | 2 | 2 | 2 | 2 | 2 | 2 |
| | | Process oil*¹⁶ | 10 | 10 | 10 | 10 | 10 | 10 | 10 | 10 | 10 |
| | | Compound (a)*¹⁷ | | | 1.5 | 1.5 | 1.5 | 1.5 | | | 1.5 |
| | | Compound (b)*¹⁸ | | | | | | | 1.5 | | |
| | | Compound (c)*¹⁹ | | | | | | | | 1.5 | |
| | Step (II) | Sulfur*²⁰ | 1 | 1 | 1 | 1 | 1 | 1 | 1 | 1 | 1 |
| | | Vulcanization accelerator*²¹ | 1.2 | 1.2 | 12 | 1.2 | 12 | 12 | 12 | 12 | 12 |
| | | Vulcanization accelerator*²² | 2 | 2 | 2 | 2 | 2 | 2 | 2 | 2 | 2 |
| Processability index | | | 100 | 112 | 109 | 106 | 105 | 104 | 108 | 107 | 113 |
| Steering stability index | | | 100 | 87 | 102 | 104 | 103 | 106 | 104 | 106 | 100 |
| Rolling resistance index | | | 100 | 98 | 141 | 139 | 146 | 129 | 137 | 129 | 146 |

**Table 2**

| | | | Ex. | | | |
|---|---|---|---|---|---|---|
| | | | 8 | 9 | 10 | 11 |
| Components of the rubber composition | Step (I) | SBR*¹ | 50 | 50 | 50 | 50 |
| | | SBR*² | 20 | 20 | 20 | 20 |
| | | BR*³ | 20 | 20 | 20 | 20 |
| | | NR*⁴ | 10 | 10 | 10 | 10 |
| | | Silica*⁵ | 85 | 85 | 85 | 85 |
| | | Silane coupling agent*⁷ | 6.8 | 6.8 | 6.8 | 6.8 |
| | | Carbon black*⁸ | 5 | 5 | 5 | 5 |
| | | Processing aid*²³ | 4 | | | |
| | | Processing aid*²⁴ | | 4 | | |
| | | Processing aid*²⁵ | | | 4 | |
| | | Processing aid*²⁶ | | | | 4 |
| | | Antioxidant*¹³ | 3 | 3 | 3 | 3 |
| | | Zinc oxide*¹⁴ | 2 | 2 | 2 | 2 |
| | | Stearic acid*¹⁵ | 2 | 2 | 2 | 2 |
| | | Process oil*¹⁶ | 10 | 10 | 10 | 10 |
| | | Compound (a)*¹⁷ | 1.5 | 1.5 | 1.5 | 1.5 |
| | Step (II) | Sulfur*²⁰ | 1 | 1 | 1 | 1 |
| | | Vulcanization accelerator*²¹ | 1.2 | 1.2 | 12 | 1.2 |
| | | Vulcanization accelerator*²² | 2 | 2 | 2 | 2 |
| Processability index | | | 112 | 115 | 109 | 111 |
| Steering stability index | | | 103 | 104 | 105 | 103 |
| Rolling resistance index | | | 149 | 136 | 149 | 152 |

### Description of Symbols in Tables

The raw materials used in the tables are as follows.
*1: produced by Zeon Corporation, trade name NS116R
*2: produced by Asahi Chemical Industry Co., Ltd., Inc., trade name Tufdene 2000R
*3: produced by Ube Industries Ltd., trade name BR150B
*4: produced by Sinochem International Corp., trade name RSS#3
*5: produced by Tosoh Silica Corporation, trade name Nipsil (grade: AQ)
*6: produced by Quechen Silicon Chemical Co., Ltd., trade name HD115MP
*7: produced by Evonik Industries AG, trade name Si75
*8: produced by Tokai Carbon Co., Ltd., trade name Seast 3
*9: produced by Rhein Chemie, trade name Aktiplast PP
*10: produced by Rhein Chemie, trade name Aflux 37
*11: produced by Struktol, trade name ZB49
*12: produced by Struktol, trade name HT207
*13: produced by Kawaguchi Chemical Industry Co., Ltd., trade name Antage 6C
*14: produced by Sakai Chemical Industry Co., Ltd., zinc oxide, grade No. 1
*15: produced by Sichuan Tianyu Grease Chemical Co., Ltd.
*16: produced by JXTG Nippon Oil & Energy Corporation, trade name X-140 (aroma oil)
*17: 3,6-bis(3-pyridyl)-1,2,4,5-tetrazine (the compound produced in Production Example 1)
*18: 3,6-bis(2-pyridyl)-1,2,4,5-tetrazine, produced by Tokyo Chemical Industry Co., Ltd.
*19: 3,6-bis(4-pyridyl)-1,2,4,5-tetrazine, produced by Tokyo Chemical Industry Co., Ltd.
*20: produced by Hosoi Chemical Industry Co., Ltd., trade name HK200-5
*21: produced by Ouchi Shinko Chemical Industrial Co., Ltd., trade name Nocceler D
*22: produced by Ouchi Shinko Chemical Industrial Co., Ltd., trade name Nocceler CZ-G
*23: produced by Tokyo Chemical Industry Co., Ltd., sodium laurate
*24: produced by Tokyo Chemical Industry Co., Ltd., N-lauroyl sarcosine
*25: produced by Tokyo Chemical Industry Co., Ltd., lauric acid amide
*26: lauric acid hydrazide (produced in Production Example 2)

### Industrial Applicability

The rubber composition of the present invention exhibits excellent steering stability and further reduced rolling resistance; therefore, the use of this rubber composition enables the production of a tread portion (tire tread) of pneumatic tires for various vehicles.

## Claims

1. A rubber composition comprising:
a rubber component;
a tetrazine compound represented by Formula (1) or a salt thereof: 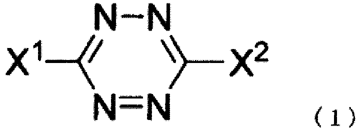
wherein X¹ and X² each represent an optionally substituted heterocyclic group; and
a processing aid,
wherein
the rubber component contains a diene rubber obtained by polymerization of monomers including 1,3-butadiene monomer, the diene rubber being present in an amount of 40 parts by mass or more, per 100 parts by mass of the rubber component, and wherein the tetrazine compound or a salt thereof is present in an amount of 0.1 to 10 parts by mass, per 100 parts by mass of the rubber component, and
wherein the processing aid is at least one member selected from the group consisting of fatty acid metal salts having 8 or more carbon atoms, fatty acid amides having 8 or more carbon atoms, and fatty acid hydrazides having 8 or more carbon atoms.

2. The rubber composition according to claim 1, further comprising an inorganic filler and/or carbon black.

3. The rubber composition according to claim 2, wherein the inorganic filler and/or carbon black are present in a total amount of 30 to 150 parts by mass, per 100 parts by mass of the rubber component.

4. The rubber composition according to claim 2 or 3, wherein the inorganic filler is silica.

5. The rubber composition according to any one of claims 1 to 4, wherein the processing aid is at least one member selected from the group consisting of fatty acid metal salts having 10 or more carbon atoms, fatty acid amides having 10 or more carbon atoms, and fatty acid hydrazides having 10 or more carbon atoms.

6. The rubber composition according to any one of claims 1 to 4, wherein the processing aid is at least one member selected from the group consisting of saturated fatty acid metal salts having 10 or more carbon atoms, saturated fatty acid amides having 10 or more carbon atoms, and saturated fatty acid hydrazides having 10 or more carbon atoms.

7. The rubber composition according to any one of claims 1 to 4, wherein the processing aid is at least one member selected from the group consisting of lauric acid metal salt, stearic acid metal salt, lauric acid amide, lauroyl sarcosine, stearic acid amide, lauric acid hydrazide, and stearic acid hydrazide.

8. The rubber composition according to any one of claims 1 to 4, wherein the processing aid is at least one member selected from the group consisting of sodium laurate and sodium stearate.

9. The rubber composition according to any one of claims 1 to 8, which is used for a tread portion.

10. A tire tread produced using the rubber composition according to any one of claims 1 to 8.

11. A pneumatic tire comprising the tire tread of claim 10.

## Patentansprüche

1. Eine Kautschukzusammensetzung, umfassend:
eine Kautschukkomponente;
eine Tetrazinverbindung, dargestellt durch die Formel (1) oder ein Salz davon: 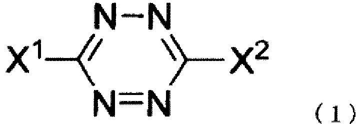
wobei X¹ und X² jeweils eine gegebenenfalls substituierte heterocyclische Gruppe darstellen; und
ein Verarbeitungshilfsmittel,
wobei
die Kautschukkomponente einen Dienkautschuk enthält, erhalten durch Polymerisation von Monomeren, beinhaltend 1,3-Butadienmonomer, wobei der Dienkautschuk in einer Menge von 40 Massenteilen oder mehr, bezogen auf 100 Massenteile der Kautschukkomponente, vorhanden ist und wobei die Tetrazinverbindung oder ein Salz davon in einer Menge von 0,1 bis 10 Massenteilen, bezogen auf 100 Massenteile der Kautschukkomponente, vorhanden ist, und
wobei das Verarbeitungshilfsmittel mindestens ein Element ist, ausgewählt aus der Gruppe bestehend aus Fettsäure-Metallsalzen mit 8 oder mehr Kohlenstoffatomen, Fettsäure-Amiden mit 8 oder mehr Kohlenstoffatomen und Fettsäure-Hydraziden mit 8 oder mehr Kohlenstoffatomen.

2. Die Kautschukzusammensetzung gemäß Anspruch 1, ferner umfassend einen anorganischen Füllstoff und/oder Carbon Black.

3. Die Kautschukzusammensetzung gemäß Anspruch 2, wobei der anorganische Füllstoff und/oder das Carbon Black in einer Gesamtmenge von 30 bis 150 Massenteilen, bezogen auf 100 Massenteile der Kautschukkomponente, vorhanden sind.

4. Die Kautschukzusammensetzung gemäß Anspruch 2 oder 3, wobei der anorganische Füllstoff Siliciumdioxid ist.

5. Die Kautschukzusammensetzung gemäß einem der Ansprüche 1 bis 4, wobei das Verarbeitungshilfsmittel mindestens ein Element ist, ausgewählt aus der Gruppe bestehend aus Fettsäure-Metallsalzen mit 10 oder mehr Kohlenstoffatomen, Fettsäure-Amiden mit 10 oder mehr Kohlenstoffatomen und Fettsäure-Hydraziden mit 10 oder mehr Kohlenstoffatomen.

6. Die Kautschukzusammensetzung gemäß einem der Ansprüche 1 bis 4, wobei das Verarbeitungshilfsmittel mindestens ein Element ist, ausgewählt aus der Gruppe bestehend aus gesättigten Fettsäure-Metallsalzen mit 10 oder mehr Kohlenstoffatomen, gesättigten Fettsäure-Amiden mit 10 oder mehr Kohlenstoffatomen und gesättigten Fettsäure-Hydraziden mit 10 oder mehr Kohlenstoffatomen.

7. Die Kautschukzusammensetzung gemäß einem der Ansprüche 1 bis 4, wobei das Verarbeitungshilfsmittel mindestens ein Element ist, ausgewählt aus der Gruppe bestehend aus Laurinsäure-Metallsalz, Stearinsäure-Metallsalz, Laurinsäureamid, Lauroylsarkosin, Stearinsäureamid, Laurinsäurehydrazid und Stearinsäurehydrazid.

8. Die Kautschukzusammensetzung gemäß einem der Ansprüche 1 bis 4, wobei das Verarbeitungshilfsmittel mindestens ein Element ist, ausgewählt aus der Gruppe bestehend aus Natriumlaurat und Natriumstearat.

9. Die Kautschukzusammensetzung gemäß einem der Ansprüche 1 bis 8, die für einen Profilabschnitt verwendet wird.

10. Ein Reifenprofil, hergestellt unter Verwendung der Kautschukzusammensetzung gemäß einem der Ansprüche 1 bis 8.

11. Ein Luftreifen, umfassend das Reifenprofil nach Anspruch 10.

## Revendications

1. Composition de caoutchouc comprenant :
un composant caoutchouc ;
un composé tétrazine représenté par la formule (1) ou un sel de celui-ci : 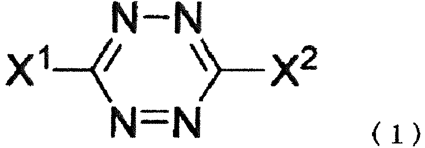
dans laquelle chacun de X¹ et X² représente un groupe hétérocycle éventuellement substitué ; et
un auxiliaire de mise en oeuvre,
dans laquelle
le composant caoutchouc contient un caoutchouc diénique obtenu par polymérisation de monomères incluant un monomère 1,3-butadiène, le caoutchouc diénique étant présent en une quantité de 40 parties en masse pour 100 parties en masse du composant caoutchouc,
et dans laquelle le composé tétrazine ou un sel de celui-ci est présent en une quantité de 0,1 à 10 parties en masse pour 100 parties en masse du composant caoutchouc,
et dans laquelle l'auxiliaire de mise en œuvre est au moins un membre choisi dans l'ensemble constitué par les sels métalliques d'acides gras ayant 8 atomes de carbone ou plus, les amides d'acides gras ayant 8 atomes de carbone ou plus, et les hydrazides d'acides gras ayant 8 atomes de carbone ou plus.

2. Composition de caoutchouc selon la revendication 1, comprenant en outre une charge inorganique et/ou un noir de carbone.

3. Composition de caoutchouc selon la revendication 2, dans laquelle la charge inorganique et/ou le noir de carbone sont présents en une quantité totale de 30 à 150 parties en masse pour 100 parties en masse du composant caoutchouc.

4. Composition de caoutchouc selon la revendication 2 ou 3, dans laquelle la charge inorganique est une silice.

5. Composition de caoutchouc selon l'une quelconque des revendications 1 à 4, dans laquelle l'auxiliaire de mise en œuvre est au moins un membre choisi dans l'ensemble constitué par les sels métalliques d'acides gras ayant 10 atomes de carbone ou plus, les amides d'acides gras ayant 10 atomes de carbone ou plus, et les hydrazides d'acides gras ayant 10 atomes de carbone ou plus.

6. Composition de caoutchouc selon l'une quelconque des revendications 1 à 4, dans laquelle l'auxiliaire de mise en œuvre est au moins un membre choisi dans l'ensemble constitué par les sels métalliques d'acides gras saturés ayant 10 atomes de carbone ou plus, les amides d'acides gras saturés ayant 10 atomes de carbone ou plus, et les hydrazides d'acides gras saturés ayant 10 atomes de carbone ou plus.

7. Composition de caoutchouc selon l'une quelconque des revendications 1 à 4, dans laquelle l'auxiliaire de mise en œuvre est au moins un membre choisi dans l'ensemble constitué par un sel métallique d'acide laurique, un sel métallique d'acide stéarique, l'amide d'acide laurique, la lauroyl-sarcosine, l'amide d'acide stéarique, l'hydrazide d'acide laurique, et l'hydrazide d'acide stéarique.

8. Composition de caoutchouc selon l'une quelconque des revendications 1 à 4, dans laquelle l'auxiliaire de mise en œuvre est au moins un membre choisi dans l'ensemble constitué par le laurate de sodium et le stéarate de sodium.

9. Composition de caoutchouc selon l'une quelconque des revendications 1 à 8, qui est utilisée pour une portion de bande de roulement.

10. Bande de roulement de pneu utilisant la composition de caoutchouc selon l'une quelconque des revendications 1 à 8.

11. Pneu comprenant la bande de roulement de pneu de la revendication 10.
